# EUROPEAN PATENT APPLICATION

(11) **EP 0 916 262 A1**
(43) Date of publication of application: **19.05.1999**
(21) Application number: 98121537.9
(22) Date of filing: 17.11.1998
(51) Int. Cl.: A01N 53/00

(54) **Cockroach repellent**

(30) Priority: 18.11.1997 JP 317112/97
(71) Applicant: Sumitomo Chemical Company, Limited, Chuo-ku Osaka 541-8550 (JP)
(72) Inventor: Ishiwatari, Takao, Toyonaka-shi, Osaka (JP)
(74) Representative: VOSSIUS & PARTNER

(57) **Abstract**

A cockroach repellent comprising 2,3,5,6-tetrafluorobenzyl (1R)-trans-3-(2,2-dichlorovinyl)-2,2-dimethylcyclopropanecarboxylate (transfluthrin) as its active ingredient and a method for repelling cockroaches by using transfluthrin.

## Description

The present invention relates to cockroach repellents.

Hitherto, an aerosol formulation containing N,N-diethyl-m-toluamide was utilized in order to repel mosquitoes and gnats. Furthermore, it is described in JP-A-56-92803 that cockroaches can be repelled by utilizing ether compounds such as empenthrin.

Noxious pest repellents containing N,N-diethyl-m-toluamide were developed to target mosquitoes and gnats, but were not sufficient to repel cockroaches effectively. Furthermore, the ether compounds described in JP-A-56-92803 are very effective for some moments after disposal, but with the effectiveness of the repellent to greatly decrease together with the passing of time, are not sufficient to repel cockroaches.

The present invention provides a high activity cockroach repellent containing transfluthrin [2,3,5,6-tetrafluorobenzyl (1R)-trans-3-(2,2-dichlorovinyl)-2,2-dimethylcyclopropanecarboxylate as an active ingredient. Additionally, the present invention provides a method of repelling cockroaches using transfluthrin, especially, a method of repelling cockroaches wherein a sheet containing transfluthrin is placed indoors.

Transfluthrin used in the present invention, a compound described in US-A 4,889,872, can be produced following the method disclosed therein.

The cockroach repellent of the present invention may be transfluthrin as the active ingredient itself, but preferred are the forms wherein transfluthrin is supported on a carrier having, for example, the form of a sheet. Formulations wherein the active agent is incorporated into a resin, emulsifiable concentrates, oil formulations, wettable powders, flowable preparations, granules, dusts, aerosol formulations and formulations for heat vaporization are indicated as possible forms, and using transfluthrin supported on a sheet is especially preferred.

When the cockroach repellent of the present invention takes the form of a sheet formulation, the material for said sheet is not especially limited, and for example, paper, synthetic resins (e.g. polyethylene, cross-linked polyethylene, polypropylene, cellophane, polyvinylidene chloride, polyvinyl chloride, polyester, polyvinyl acetal, polyamide, fluorocarbon resin, polycarbonate and copolymers thereof) and cloth (e.g. cotton, silk, wool, hemp or synthetic fibers) are feasible. The amount of transfluthrin to be supported on the sheet is about 0.01g to 50g for 1m², preferably 0.05g to 20g.

When the cockroach repellent of the present invention takes the form of an emulsifiable concentrate or oil formulation the amount of transfluthrin within said formulation is generally from 0.01 to 10% by weight.

Furthermore, the cockroach repellent of the present invention may additionally contain pest repellent ingredients other than transfluthrin, for example, N,N diethyl-m-toluamide, carane-3,4-diol, 1-methylpropyl 2-(2-hydoxyethyl)-1-piperidinecarboxylate, p-menthane-3,8-diol or botanical essential oils having pest repellency.

The cockroach repellent of the present invention may be used in the location desired for cockroach control, for example, sites intruded by cockroaches such as households warehouses or food service areas.

The method of repelling cockroaches of the present invention not only includes applying the cockroach repellent formulation of the present invention to the sites where cockroaches should be repelled as by dispersing, spraying, spreading, placing or pasting, but also that transfluthrin is incorporated into the material of household instruments beforehand by e.g. spreading, soaking, kneading or dripping, so that when using household instruments that were made from using said material, a method of repelling cockroaches is practiced. The amount of transfluthrin used in the cockroach repellent of the present invention, is generally from about 0.01g to 50g, preferably from 0.05 to 20g per m².

The cockroach repellent of the present invention is effective in repelling various cockroaches such as German cockroach (*Blattella germanica*), smokybrown cockroach (*Periplaneta fuliginosa*), American cockroach (*Periplaneta americana*), brown cockroach (*Periplaneta brunnea*) and oriental cockroach (*Blatta orientalis*).

### [Examples]

On 6cm x 9cm filter paper 1.0ml of an acetone solution (1% by weight) of transfluthrin was spread and dried. The obtained cockroach repellent (sheet formulation) was folded, as to be a tube-like triangular pillar where one side of the triangle-shaped base was 3cm.

The triangular pillar was placed in a 650ml volume plastic cup as a shelter (cockroach hiding residence) 10 adult German cockroaches (*Blattella germanica*) were placed in said plastic cup together with food and water, and the number of cockroaches in the shelter was observed 24 hours later. The test was repeated twice. Furthermore, the same test was performed after said triangularly pillared shelter has been stored under the conditions of 25°C and 60% humidity for 1 month.

Results are stated in Table 1. The results are evaluated by the number of cockroaches inside the shelter. Namely, the " - " means that it was 0, " + " is for 1 to 2 cockroaches, and " ++ " is 3 or more.

In addition, tests results using empenthrin and furthermore N,N-diethyl-m-toluamide (Deet) replacing transfluthrin as well as test results using an untreated shelter are also stated in Table 1.

**[Table 1]**

| | Test results just after treatment | Test results after 1 month conserved |
|---|---|---|
| transfluthrin | - | - |
| empenthrin | - | ++ |
| Deet | ++ | |
| non-treatment | ++ | |

As seen in the above table, the cockroach repellent of the present invention is effective for repelling cockroaches even after a storage of 1 month.

The cockroach repellent of the present invention is not only effective at an early time after its production but also after a long storage. It is thus an extraordinary effective repellent.

## Claims

1. A cockroach repellent which comprises transfluthrin as an active ingredient and an inert carrier.

2. A cockroach repellent which comprises transfluthrin supported on a sheet.

3. A method for repelling cockroaches which comprises applying an effective amount of transfluthrin to sites intruded by cockroaches.

4. A method for repelling cockroaches which comprises placing a sheet containing transfluthrin indoors.

5. A use of transfluthrin for repelling cockroaches.
